# EUROPEAN PATENT APPLICATION

(11) **EP 0 634 420 A1**
(43) Date of publication of application: **18.01.1995**
(21) Application number: 94201981.1
(22) Date of filing: 08.07.1994
(51) Int. Cl.: C08C 19/44, C08L 9/00, C08F 8/08, C08L 53/00

(54) **Star polymers**

(30) Priority: 12.07.1993 US 90851
(71) Applicant: SHELL INTERNATIONALE RESEARCH MAATSCHAPPIJ B.V., NL-2596 HR Den Haag (NL)
(72) Inventor: Handlin, Dale Lee, Jr., Houston, Texas 77082 (US); Erickson, James Robert, Katy, Texas 77450 (US); Willis, Carl Lesley, Houston, Texas 77084 (US)

(57) **Abstract**

A star polymer made by anionically polymerizing a conjugated diene to form living polymer arms and coupling said arms with a coupling agent for star polymers wherein the amount of uncoupled arms in the polymer ranges from 10 to 50 percent.

## Description

This invention relates to star polymers of conjugated dienes which are cross-linkable and have a relatively low viscosity. More particularly, the invention relates to functionalized cross-linkable star polymers, especially epoxidized and hydroxy-containing cross-linkable star polymers having a relatively low viscosity.

Block copolymers can be obtained by anionic polymerization of a conjugated diene, optionally with a vinyl aromatic hydrocarbon, by using an organic alkali metal initiator. One commonly used method involves first polymerizing monomer A, such as styrene, to form a living polymer block. Then monomer B, such as butadiene or isoprene is polymerized at the end of the A block to form an A-B block polymer which is still living. This A-B block polymer is referred to as a diblock polymer or, when discussed in the context of a branched or star polymer, as a block polymer arm or living polymer arm. These block polymer arms are then coupled together by the addition of a coupling agent which reacts with two or more of the arms to form one compound. If two arms react, then the polymer will have the structure A-B-X-B-A where X is the coupling agent. Since X is only one molecule and is relatively small, the polymer looks and acts like a linear A-B-A block copolymer. This process is generally described in U.S. Patent No. 3,595,941, 3,468,972 and 4,096,203.

In general, when using the coupling process, the effort was always made to select a particular coupling agent or reaction conditions that resulted in the highest amount of A-B-A block copolymer being produced. Another way to state this is that they were trying to minimize the number of free block copolymer arms left after the coupling reaction was complete. U.S. Patent 4,096,203 describes how to achieve different levels of free arms, referred to as uncoupled polymer in the patent, in the final product.

It is well known that such linear polymers with relatively large amounts of free polymer arms or uncoupled polymer have a lower viscosity than such triblock copolymers with a very small amount of free polymer arms. There are some advantages to having a lower viscosity for the polymer. In fact, some people have gone so far as to add free polymer arms in the form of diblock to a triblock copolymer to lower its viscosity and increase the overall tack of the compositionsee for example U.S. Patents 4,080,348 and 4,136,071. Unfortunately, the presence of such free polymer arms also dramatically decreases the overall molecular weight of the polymer. A reduction in molecular weight is particularly undesirable when the intent is to produce a crosslinkable polymer composition. A higher molecular weight polymer requires fewer reactions to cure or crosslink. Higher molecular weight polymers have a smaller number of molecules per unit of mass and this means that there are more reactive double bonds per molecule per unit of mass which are available to participate in the cross-linking reaction.

Star polymers are also produced by a coupling process. The coupling agents used are polyfunctional coupling agents or monomers. A much preferred coupling agent is a polyalkenyl aromatic coupling agent such as described in Canadian Patent 716,645 and U.S. Patents 4,391,949 and 4,444,953. Monomers of this type, such as divinylbenzene, may polymerize or oligomerize as well as react with living chain ends. The result of these two types of reactions is the formation of a star shaped polymer having up to 40 or 50 arms attached to a central core which is composed principally of the coupling agent.

Star polymers generally have relatively high molecular weights because of the number of polymer arms present in the molecule. Because of the number of polymer arms, there are quite a number of potential cross-linking sites in the molecule as well. It would be advantageous to provide a cross-linkable star polymer with a relatively low viscosity which was able to maintain its relatively high molecular weight. The present invention provides such a polymer and functionalized versions thereof.

Accordingly, the present invention relates to a star polymer made by anionically polymerizing a conjugated diene to form living polymer arms and coupling the arms with a coupling agent for star polymers wherein the amount of uncoupled arms in the polymer ranges from 10 to 50 percent. Suitably, at least 3 living polymer arms are formed. Preferably, at least 5 living polymer arms are formed. The amoutn of uncoupled arms in the polymer preferably ranges from 20 to 45 percent. The invention also relates to functionalized versions of such polymers wherein functionality selected from the group consisting of epoxy, hydroxy, carboxy, phenol and amine is incorporated into the polymer.

A highly preferred embodiment of the present invention is an epoxidized star polymer made by first making the polymer described above and then epoxidizing that polymer. It is most preferred to provide selectively epoxidized star polymers wherein the epoxidation on the polymer is selectively located on the exterior blocks of the polymer to provide cross-linking sites in a location where they are more easily and more readily available for cross-linking reaction than if they were on the interior of the polymer molecule. Preferably, the epoxidized star polymer comprises at least one exterior block and at least one interior block wherein the exterior blocks contain a greater concentration of di-, tri-, or tetrasubsituted olefinic epoxides than the interior blocks.

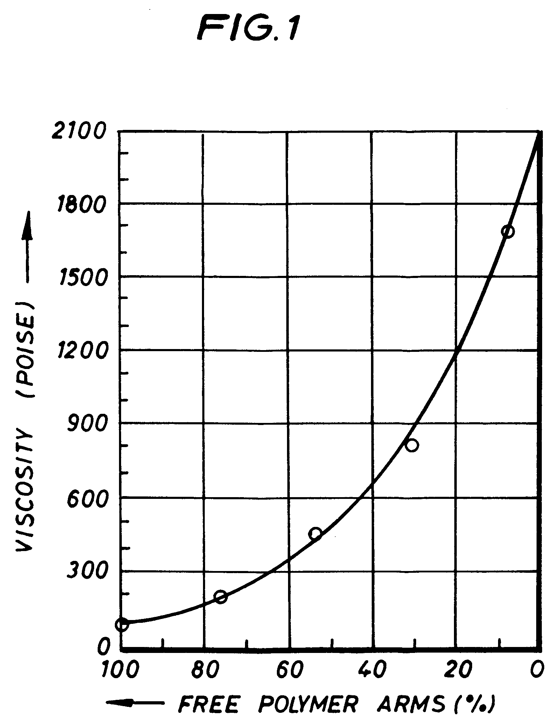

Figure 1 is a plot of viscosity versus the percentage of free polymer arms in the polymer or a blend of a polyisoprene star polymer having an arm molecular weight of 6800 and a polyisoprene homopolymer having a molecular weight of 6850. The data is described in Example 1.

Polymers containing ethylenic unsaturation can be prepared by copolymerizing one or more polyolefins, particularly a diolefin. The copolymers may, of course, be random, tapered, block or a combination of these, as well as linear, star or radial.

The polymers containing ethylenic unsaturation may be prepared using anionic initiators or polymerization catalysts. Such polymers may be prepared using bulk, solution or emulsion techniques. In any case, the polymer containing at least ethylenic unsaturation will, generally, be recovered as a solid such as a crumb, a powder, a pellet or the like, but it also may be recovered as a liquid such as in the present invention. Polymers containing ethylenic unsaturation are available commercially from several suppliers.

In general, when solution anionic techniques are used, copolymers of conjugated diolefins are prepared by contacting the monomer or monomers to be polymerized simultaneously or sequentially with an anionic polymerization initiator such as group IA metals, their alkyls, naphthalides, biphenyls or anthracenyl derivatives. It is preferred to use an organo alkali metal (such as sodium, lithium or potassium) compound in a suitable solvent at a temperature within the range from -150°C to 300°c, preferably at a temperature within the range from 0°C to 100°C. Particularly effective anionic polymerization initiators are organo lithium compounds having the general formula:

RLiₙ

wherein R is an aliphatic, cycloaliphatic, aromatic or alkyl-substituted aromatic hydrocarbon radical having from 1 to 20 carbon atoms and n is an integer of 1 to 4.

Conjugated diolefins which may be polymerized anionically include those conjugated diolefins containing from 4 to 24 carbon atoms such as 1,3-butadiene, isoprene, piperylene, methylpentadiene, phenyl-butadiene, 3,4-dimethyl-1,3-hexadiene, 4,5-diethyl-1,3-octadiene and the like. Isoprene and butadiene are the preferred conjugated diene monomers for use in the present invention because of their low cost and ready availability. The conjugated diolefins which may be used in the present invention include monomers which do and monomers which do not form a polymer wherein the residual aliphatic double bonds are positioned between a tertiary carbon atom and another type of carbon atom (TU sites). Examples of monomers that do provide TU sites after polymerization include isoprene (2-methyl-1,3-butadiene), 2-ethyl-1,3-butadiene, 2-propyl-1,3-butadiene, 2-butyl-1,3-butadiene, 2-butyl-1,3-butadiene, 2-pentyl-1,3-butadiene (2-amyl-1,3-butadiene), 2-hexyl-1,3-butadiene, 2-heptyl-1,3-butadiene, 2-octyl-1,3-butadiene, 2-nonyl-1,3-butadiene,2-decyl-1,3-butadiene, 2-dodecyl-1,3-butadiene, 2-tetradecyl-1,3-butadiene, 2-hexadecyl-1,3-butadiene, 2-isoamyl-1,3-butadiene, 2-phenyl-1,3-butadiene, 2-methyl-1,3-pentadiene, 2-methyl-1,3-hexadiene, 2-methyl-1,3-heptadiene, 2-methyl-13-octadiene, 2-methyl-6-methylene-2,7-octadiene (myracene), 2-methyl-1,3-nonyldiene, 2-methyl-1,3-decyldiene, and 2-methyl-1,3-dodecyldiene, as well as the 2-ethyl, 2-propyl, 2-butyl, 2-bentyl, 2-hexyl, 2-heptyl, 2-octyl, 2-nonyl, 2-decyl, 2-dodecyl, 2-tetradecyl, 2-hexadecyl, 2-isoamyl and 2-phenyl versions of all of these dienes. Those that do not form polymers wherein the residual aliphatic double bonds are positioned between a tertiary carbon atom and another carbon atom include 1,3-butadiene, piperylene, 4,5-diethyl-1,3-octadiene and the like.

As discussed above, the star polymers are made by coupling polymer arms using a polyfunctional coupling agent or coupling monomer. A preferred coupling agent is a polyalkenyl aromatic coupling agent such as those described in U.S. Patents 4,010,226, 4,391,949 and 4,444,953, which are herein incorporated by reference. U.S. Patent 5,104,921, which is also herein incorporated by reference, contains a complete description of such polyalkenyl aromatic compounds in columns 12 and 13. Divinyl aromatic hydrocarbons containing up to 26 carbon atoms per molecule are preferred and particularly divinyl benzene in either its meta, or para isomer and commercial divinyl benzene which is a mixture of said isomers is also quite satisfactory. The coupling agent is preferably added to the living polymer after the polymerization is substantially complete. The amount of coupling agent varies between wide limits but preferably at least one equivalent is used per equivalent of unsaturated living polymer to be coupled. The coupling reaction is generally carried out in the same solvent as for the polymerization reaction. The temperature varies between wide limits, for example, from 25°C to 95°C.

In order to achieve the advantages of the present invention, the star polymers are made such that, after coupling, they contain from 10 to 50 percent free polymer arms, i.e., polymer arms which are not attached to the coupling agent core of the polymer. If the number of free arms is more than 50 percent, then the molecular weight of the polymer has dropped so low that cross-linking is much harder to achieve, i.e., the advantages of having many arms with many cross-linking sites is canceled out by the presence of a greater number of smaller molecules having a lower number of cross-linking sites per molecule. If the number of free polymer arms is less than 10 percent, then the viscosity is not significantly reduced compared to the star polymer. Preferably, the number of free arms should range from 20 percent to 40 percent because this provides the best balance of lower viscosity and higher molecular weight. The lowering of the viscosity without appreciably effecting molecular weight is very dramatic for star polymers as shown by Figure 1 and explained in more detail in Example 1.

Specification of a particular amount of free polymer arms in the polymer is an extremely important aspect of the present invention. Control of the number of free arms can be achieved simply by making a star polymer and blending into it a homopolymer or diblock polymer which will then become the source of the free polymer arms. Alternatively, the number of free polymer arms can be controlled during the polymerization of the star polymer itself. This is accomplished by terminating a specified portion of the living polymer before addition of the coupling agent, reducing the ratio of the number of moles of coupling agent to living arms and/or reducing the time between the coupling agent addition and termination of the coupling reaction.

Preferred block copolymers which are useful in the present invention have the formula

(A-B-Aₚ)ₙ-Y-(A_{q}-B)ₘ

wherein Y is a coupling agent or coupling monomers, and wherein A and B are polymer blocks which may be homopolymer blocks of conjugated diolefin monomers, copolymer blocks of conjugated diolefin monomers or copolymer blocks of diolefin monomers. These polymers are described in more detail in U.S. patent 5,229,464. Generally, the A blocks should have a greater concentration of more highly substituted aliphatic double bonds than the B blocks have. The A blocks will have a greater concentration of di-, tri-, or tetra-substituted aliphatic double bonds. For example, in one embodiment, the A blocks will have a greater number of tertiary (trisubstituted) unsaturation (TU) sites per unit of block mass than the B blocks, where a TU site is defined to be an aliphatic double bond (ADB) between a tertiary carbon atom and either a primary or secondary carbon atom. The A blocks have a molecular weight of from 100 to 3,000 and the B blocks have a molecular weight of from 1000 to 15,000. n is greater than 0, m is greater than or equal to 0, and n + m ranges from 3 to 100. p and q may be 0 or 1. When either p or q or both are 1, extra TU sites are available in the interior of the polymer chain. By way of example, polymer block A could be polyisoprene having about 14.7 milliequivalents of residual ADB's per gram, many of which would be TU sites (up to 14.7 Meq TU/g), and polymer block B could be polybutadiene having 18.5 milliequivalents of residual ADB's per gram, none of which would be TU sites (0 Meq TU/g). These polymers have exterior cross-linking sites which enhance the cross-linking ability of these polymers. They may be functionalized at these sites to further enhance the cross-linking ability.

When these polymers are epoxidized, whether they are hydrogenated or not, it is preferred that the epoxidation take place only to the extent that 0.1 to 3 milliequivalents of epoxide per gram of polymer (0.1 to 3 Meq epoxide/g) are generated. Hence, the preferred epoxidized polymer has an epoxide equivalent weight of between 10,000 and 333. The polymers may then be cross-linked through at least some of the epoxy functionality, preferably, by radiation.

A preferred embodiment of the present invention is an epoxidized star polymer having the formula:

(A-B-Aₚ)ₙ-Y-(A_{q}-B)ₘ

wherein Y is a coupling agent or coupling monomers, and wherein A and B are polymer blocks which may be homopolymer blocks of conjugated diene monomers, copolymer blocks of conjugated diene monomers or copolymer blocks of conjugated diene monomers, and wherein the A blocks have a greater number of di-, tri- and tetrasubstituted olefinic epoxides per unit of block mass than do the B blocks, and
wherein the A blocks have a molecular weight from 100 to 3000 and the B blocks have a molecular weight from 1000 to 15,000, and wherein p and q are 0 or 1 and n > 0, m ≧ 0 and n + m ranges from 3 to 100; and wherein the copolymer is epoxidized such that 0.1 to 3 Meq/g of epoxide is present.

In general, it is preferred that the polymer have exterior A blocks which contain more highly substituted aliphatic double bonds than interior B blocks which should contain less highly substituted double bonds. One preferred specific example of this is the case where the A blocks are formed from isoprene monomer and the B blocks are formed from butadiene monomer. However, another special case is the situation wherein the A blocks are formed from 1,4 addition of butadiene monomer and the B blocks are formed from 1,2 addition of butadiene monomer. Another special case is wherein the A blocks are formed from 2,3-dimethyl butadiene (tetra-substituted) and the B blocks are formed from either isoprene or butadiene.

Useful randomly epoxidized star polymers are those based on at least one conjugated diene monomer, that contained di-, tri- and/or tetrasubstituted olefinic epoxides. The star polymers have greater than four arms or branches. Each arm has a molecular weight from 1500 to 15,000 and the concentration of di-, tri-, or tetrasubstituted olefinic epoxides (1,1-disubstituted, 1,2-disubstituted, 1,1,2-trisubstituted and 1,1,2,2-tetrasubstituted olefinic epoxides) is from 0.05 to 5 milli-equivalents of epoxide per gram of polymer.

Other useful star block copolymers are based on at least one conjugated diene monomer and contain a greater concentration of di-, or tri-, or tetrasubstituted olefinic epoxides in the exterior blocks, and lesser concentrations of these epoxides in the interior blocks of the polymer. The exterior blocks generally contain such epoxides within the concentration range of 0.2 to 10 milliequivalents of exterior block and the ratio of the concentration such epoxide groups in the exterior blocks to the concentration in the interior blocks is at least 3:1. A special case is where the exterior blocks are formed of polyisoprene polymerized under conditions that yield primarily 1,4-polyisoprene (trisubstituted) and the interior blocks are of polybutadiene (mono- or disubstituted). Such polymers give the advantage of localizing the cross-linking in the exterior blocks.

In general, any of the solvents known in the prior art to be useful in the preparation of such polymers may be used. Suitable solvents, then, include straight- and branched chain hydrocarbons such as pentane, hexane, heptane, octane and the like, as well as, alkyl-substituted derivatives thereof; cycloaliphatic hydrocarbons such as cyclopentane, cyclohexane, cycloheptane and the like, as well as alkyl-substituted derivatives thereof; aromatic and alkyl-substituted derivatives thereof; aromatic and alkyl-substituted aromatic hydrocarbons such as benzene, naphthalene, toluene, xylene and the like; hydrogenated aromatic hydrocarbons such as tetralin, decalin and the like; linear and cyclic ethers such as methyl ether, methylethyl ether, diethyl ether, tetrahydrofuran and the like.

More specifically, the polymers of the present invention are made by the anionic polymerization of the monomers in a hydrocarbon solvent at a temperature between 0 and 100°C, preferably 25 to 80°C, using an alkyl lithium initiator. The living polymer chains are usually coupled by addition of divinyl monomer to form a star polymer. Additional monomers may or may not be added to grow more branches or to terminally functionalize the polymer and the living chain ends are quenched with a proton source.

Diblock molecular weights are conveniently measured by Gel Permeation Chromatography (GPC), where the GPC system has been appropriately calibrated. Polymers of known molecular weight are used to calibrate and these must be of the same molecular structure and chemical composition as the unknown diblock polymers that are measured. For anionically polymerized diblock polymers, diblock polymer is essentially monodisperse and it is both convenient and adequately descriptive to report the "peak" molecular weight of the narrow molecular weight distribution observed. Another good method to use for a star polymer is to measure the weight average molecular weight by light scattering techniques known per se. The sample is dissolved in a suitable solvent at a concentration less than 1.0 gram of sample per 100 milliliters of solvent and filtered using a syringe and porous membrane filters of less than 0.5 microns pore size directly into the light scattering cell. The light scattering measurements are performed as a function of scattering angle and of polymer concentration using standard procedures. The differential refractive index (DRI) of the sample is measured at the same wave length and in the same solvent used for the light scattering.

Preferably, the polymer is epoxidized under conditions that enhance the epoxidation of the more highly substituted olefinic double bonds, such as by the use of peracetic acid, wherein the rate of epoxidation is generally greater the greater the degree of substitution of the olefinic double bond (rate of epoxidation: tetrasubstituted > trisubstituted > disubstituted > monosubstituted olefinic double bond) . Sufficient epoxidation is done to achieve the desired level of epoxidation in the polymer. ¹H NMR can be used to determine the loss of each type of double bond and the appearance of epoxide.

If a substantially saturated polymer is desired, the epoxidized polymer is hydrogenated to remove substantially all remaining aliphatic double bonds (ADB) and normally leaving substantially all of the aromatic double bonds. Alternatively, selective partial hydrogenation of the polymer may be carried out before epoxidation such that from 0.05 to 5 Meq of aliphatic double bonds are left intact for subsequent epoxidation. In this case, the unsaturated polymer may be partially hydrogenated in a selective manner with a suitable catalyst and conditions that favour the hydrogenation of the less substituted ADB's (rate or hydrogenation: monosubstituted > disubstituted > tri-substituted > tetrasubstituted ADB's) and also leaves aromatic double bonds intact.

Epoxidation of the base polymer can be effected by reaction with organic peracids which can be preformed or formed in situ. Suitable preformed peracids include peracetic and perbenzoic acids. In situ formation may be accomplished by using hydrogen peroxide and a low molecular weight fatty acid such as formic acid. Alternatively, hydrogen peroxide in the presence of acetic acid or acetic anhydride and a cationic exchange resin will form a peracid. The cationic exchange resin can optionally be replaced by a strong acid such as sulfuric acid or p-toluenesulfonic acid. The epoxidation reaction can be conducted directly in the polymerization cement (polymer solution in which the polymer was polymerized) or, alternatively, the polymer can be redissolved in an inert solvent such as toluene, benzene, hexane, cyclohexane, methylenechloride and the like and epoxidation conducted in this new solution or can be epoxidized neat. Epoxidation temperatures on the order of 0 to 130°C and reaction times from 0.1 to 72 hours may be utilized. When employing hydrogen peroxide and acetic acid together with a catalyst such as sulfuric acid, the product can be a mixture of epoxide and hydroxy ester. Epoxidation may also be accomplished by treatment of the polymer with hydroperoxides or oxygen in the presence of transition metals such as Mo, W, Cr, V and Ag, or with methyl-trioxorhenium/hydrogen peroxide with and without amines present.

Epoxidation may also be accomplished by treatment of the polymer with hydroperoxides in the presence of transition metals such as Mo, W, Cr, V and Ag. Epoxy functionality may also be created by direct oxidation of ethylenic unsaturation by O₂ in the presence of tetra cyanoethylene. A temperature of 150°C and an oxygen partial pressure of 58 atmospheres is suitable for this reaction.

The polymers of this invention may be cured by ultraviolet or electron beam radiation, but radiation curing utilizing a wide variety of electromagnetic wavelength is feasible. Either ionizing radiation such as alpha, beta, gamma, X-rays and high energy electrons or non-ionizing radiation such as ultraviolet, visible, infrared, microwave and radio frequency may be used.

The mechanism of the radiation cross-linking is believed to be generation of cations by removal of an electron from the polymer chain. The cation then readily reacts with an epoxy group, if an epoxy group is available. This reaction results in an ether crosslink between two polymer molecules and a new cation site on a polymer which formerly contained the epoxy functionality. The new cation will either propagate, forming another either crosslink with another epoxy oxygen, or terminate by recapturing an electron.

The presence of water in the polymer composition during the radiation cross-linking is very undesirable due to the tendency of water to terminate the cross-linking. The radiation curing is therefore generally more effective if the polymeric composition is at a temperature near or above the boiling point of water at the time of the radiation curing.

Reactive (radiation curable) diluents that can be added to the polymer include alcohols, vinyl ethers, epoxides, acrylate and methacrylate monomers, oligomers and polymers. They may also be blended with other diene-based polymers. Examples of epoxides include bis (2,3-epoxy cyclopentyl)ether, vinyl cyclohexene dioxide, limonene dioxide, epoxidized soya and linseed oils and fatty acids, vernonia oil and UVRG 110 (UVRG is a trade mark) from Union Carbide.

The polymers may also be cured without the use of radiation by addition of a cationic initiator. Suitable initiators include the halides of tin, aluminum, zinc, boron, silicon, iron, titanium, magnesium and antimony, and the fluoroborates of many of these metals. BF₃ complexes such as BF₃-ether and BF₃-amine are included. Also useful are strong Bronsted acids such as trifluoromethanesulfonic (triflic acid) and the salts of triflic acid such as FC-520. The cationic initiator is chosen to be compatible with the polymer being cross-linked, the method of application and cure temperature.

The materials of the present invention are useful in adhesives (including pressure sensitive adhesives, contact adhesives, laminating adhesives and assembly adhesives), sealants, coatings, films (such as those requiring heat and solvent resistance), printing plates, fibers, and as modifiers for polyesters, polyethers and polyamides. The polymers are also useful in asphalt modification. In addition to the functionalized polymer and any curing aids or agents, products formulated to meet performance requirements for particular applications may include various combinations of ingredients including adhesion promoting or tackifying resins, plasticizers, fillers, solvents, stabilizers, etc. as described in detail in the aforementioned commonly assigned applications which are incorporated by reference.

Adhesive compositions utilizing the polymers of the present invention may be utilized as many different kinds of adhesives' for example, laminating adhesives, flexible packaging laminated adhesives, pressure sensitive adhesives, tie layers, hot melt adhesives, solvent borne adhesives and waterborne adhesives in which the water has been removed before curing. The adhesive can consist of simply the epoxidized polymer or, more commonly, a formulated composition containing a significant portion of the epoxidized polymer along with other known adhesive composition components. A preferred method of application will be warm melt application at a temperature 20 to 125°C because warm melt application is non-polluting and can be used on heat sensitive substrates. The adhesive can be heated before and after cure to further promote cure or post cure. Radiation cure of warm adhesive is believed to promote faster cure than radiation cure at room temperature.

Preferred uses of the present polymers are in the preparation of pressure-sensitive adhesive tapes and the manufacture of labels or flexible packaging. The pressure-sensitive adhesive tape comprises a flexible backing sheet and a layer of the adhesive composition of the instant invention coated on one major surface of the backing sheet. The backing sheet may be a plastic film, paper or any other suitable material and the tape may include various other layers or coatings, such as primers, release coatings and the like, which are used in the manufacture of pressure-sensitive adhesive tapes. Alternatively, when the amount of tackifying resin is zero, the compositions of the present invention may be used for adhesives that do not tear paper and molded goods and the like.

### Example 1

A blend was made of a polyisoprene star polymer and a homopolyisoprene with a molecular weight approximately that of the arms of the star. The star was made by anionic synthesis and consisted of polyisoprene arms with a molecular weight of 6800 as determined by GPC, coupled with divinyl benzene to form a star of total weight average molecular weight 161,000 as determined by light scattering. According to GPC, 7% of the arms remained unattached to the core. The homopolymer was a narrow molecular weight polyisoprene made by anionic methods with a peak molecular weight of 6850 by GPC.

Figure 1 shows the viscosity of the neat materials as well as blends of the two where the homopolyisoprene is denoted as 100% free arms and the star polymer is plotted at 7% free arms. As the data shows, the addition of only 25% free arms reduces the viscosity by nearly a factor of 3 while reducing the weight average molecular weight only from approximately 161,000 for the star with no free arms to 122,000 for the star with 25% free arms.

### Example 2

An epoxidized star polymer was made with the structure:

Y-(A¹-eI)ₙ

where Y is the divinyl benzene coupling agent and the arm consists of two blocks: A¹ is a 40% vinyl content polybutadiene of 4940 molecular weight and eI is a block of epoxidized isoprene block of 860 molecular weight. There were 16% free arms and the total molecular weight of the polymer was 83,000 as determined by light scattering. The total epoxy level is 2.27 meq per gram with ten times as many epoxy groups in the eI block as compared to the A¹ block.

A linear diblock copolymer similar in composition to the arm of the star polymer was synthesized with the formula:

A¹-eI

where A¹ is a 40% vinyl content polybutadiene of molecular weight 4650 and eI is an epoxidized polyisoprene block of 950 molecular weight. The total epoxy level was 2.37 meq per gram. Free arms were blended with the star polymer in proportions shown in Table 1 and the viscosities are reported in Table 1.

**Table 1**

| Star Polymer % | Added Arm % | Total Free Arm % | Viscosity (Poise) |
|---|---|---|---|
| 100 | | 16 | 12,100 |
| 89 | 11 | 25 | 8,760 |
| 60 | 40 | 50 | 3,340 |
| 30 | 70 | 75 | 1,150 |

### Example 3

Two polymers were synthesized by anionic methods with the structure:

Y-(A²-eI)ⁿ

where Y is the coupling agent divinyl benzene, A² is a hydrogenated polybutadiene block and eI is an epoxidized isoprene block. Polymer A was made with a ratio of moles of DVB to moles of living arms of 2.1:1. Polymer B has a larger number of free arms because the ratio of moles of DVB to moles of living arms was reduced to 1.5:1. Polymers A and B have the following characteristics:

**Table 2**

| | Polymer A | Polymer B |
|---|---|---|
| A² Molecular Weight | 860 | 950 |
| eI Molecular Weight | 4,940 | 4,650 |
| Total Molecular Weight | 83,000 | 77,000 |
| Free Arms (%) | 16% | 41% |
| Epoxidation Level (meq/gram) | 0.95 | 0.65 |
| Viscosity (Poise at 25°C) | 35,000 | 5,400 |

As can be seen from the data, Polymer B has a considerably lower viscosity because of its higher proportion of free arms.

### Example 4

For comparison purposes, an epoxidized linear isoprene homopolymer was blended with a lower molecular weight isoprene homopolymer. A linear, narrow molecular weight distribution polyisoprene of 29,000 molecular weight was used. The polymer was epoxidized to a level of 2.6 meq/gram. To this polymer was added a linear polyisoprene of 6850 molecular weight made by anionic synthesis. These data are compared to the data obtained for Example 1 in Table 3 below. To provide a more direct comparison, columns 3 and 5 were divided by the viscosity of the polymers with no free homopolymers. For the polymer in Example 1, the zero free arm viscosity was taken from the extrapolated value in Figure 1.

**Table 3**

| % Homopolymer | Vis (Poise) Example 1 | Vis/Vis (0) Example 1 | Vis (Poise) Example 4 | Vis/Vis (0) Example 4 |
|---|---|---|---|---|
| 0 | 2,101 | 1.0 | 1,750 | 1.0 |
| 7.5 | 1,675 | 0.797 | | |
| 11.3 | | | 1,700 | 0.97 |
| 25.1 | | | 1,400 | 0.80 |
| 30.6 | 787 | 0.375 | | |
| 51.3 | | | 560 | 0.32 |
| 53.7 | 439 | 0.209 | | |
| 79.9 | 196 | 0.093 | | |
| 100 | 79.5 | 0.038 | | |

The normalized data in Table 3 clearly show that the small arm star molecule's viscosity is decreased much more rapidly by the addition of free arms than is the viscosity of the linear molecule.

## Claims

1. A star polymer made by anionically polymerizing a conjugated diene to form living polymer arms and coupling said arms with a coupling agent for star polymers wherein the amount of uncoupled arms in the polymer ranges from 10 to 50 percent.

2. A star polymer according to claim 1 wherein the amount of uncoupled arms in the polymer ranges from 20 to 45 percent.

3. A star polymer according to claim 1 which has been functionalized to incorporate functional groups selected from the group consisting of epoxy, hydroxy, carboxy, phenol, and amine into the polymer.

4. An epoxidized star polymer made by anionically polymerizing a conjugated diene to form living polymer arms and coupling said arms with a coupling agent for star polymers wherein the amount of uncoupled arms in the polymer ranges from 10 to 50 percent; and epoxidizing the resulting polymer.

5. An epoxidized star polymer according to claim 4 which comprises at least one exterior block and at least one interior block wherein the exterior blocks contain a greater concentration of di-, tri-, or tetrasubstituted olefinic epoxides than the interior blocks.

6. A star polymer according to claim 5 having the formula:
(A-B-Aₚ)ₙ-Y-(A_{q}-B)ₘ
wherein Y is a coupling agent or coupling monomers, and wherein A and B are polymer blocks which may be homopolymer blocks of conjugated diene monomers, copolymer blocks of conjugated diene monomers or copolymer blocks of conjugated diene monomers, and wherein the A blocks have a greater number of di-, tri- and tetrasubstituted olefinic epoxides per unit of block mass than do the B blocks, and
wherein the A blocks have a molecular weight from 100 to 3000 and the B blocks have a molecular weight from 1000 to 15,000, and wherein p and q are 0 or 1 and n > 0, m ≧ 0 and n + m ranges from 3 to 100; and wherein the copolymer is epoxidized such that 0.1 to 3 Meq/g of epoxide is present.
